(19) Europäisches Patentamt
European Patent Office
Office européen des brevets

(11) **EP 3 512 809 B1**

(12) **EUROPÄISCHE PATENTSCHRIFT**

(45) Veröffentlichungstag und Bekanntmachung des Hinweises auf die Patenterteilung:
**27.10.2021   Patentblatt 2021/43**

(51) Int Cl.:
*C01B 32/949* (2017.01)      *C22C 29/08* (2006.01)

(21) Anmeldenummer: **17761500.2**

(22) Anmeldetag: **04.09.2017**

(86) Internationale Anmeldenummer:
**PCT/EP2017/072114**

(87) Internationale Veröffentlichungsnummer:
**WO 2018/050474 (22.03.2018 Gazette 2018/12)**

(54) **NEUARTIGES WOLFRAMCARBIDPULVER UND DESSEN HERSTELLUNG**

NOVEL TUNGSTEN CARBIDE POWDER AND PRODUCTION THEREOF

NOUVELLE POUDRE DE CARBURE DE TUNGSTÈNE ET FABRICATION DE CELLE-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.09.2016   DE 102016011096**

(43) Veröffentlichungstag der Anmeldung:
**24.07.2019   Patentblatt 2019/30**

(73) Patentinhaber: **H.C. Starck Tungsten GmbH 80335 München (DE)**

(72) Erfinder:
• **SAEUBERLICH, Tino 38667 Bad Harzburg (DE)**

• **CASPERS, Bernhard Vienenburg 38690 (DE)**
• **TAPPE, Tizian Goslar 38642 (DE)**

(74) Vertreter: **dompatent von Kreisler Selting Werner - Partnerschaft von Patent- und Rechtsanwälten mbB Deichmannhaus am Dom Bahnhofsvorplatz 1 50667 Köln (DE)**

(56) Entgegenhaltungen:
JP-A- 2005 335 997      US-A- 4 948 573
US-A- 5 071 473      US-A- 5 166 103
US-A- 5 372 797      US-A- 5 567 662

**Beschreibung**

Die vorliegende Erfindung betrifft ein neuartiges Wolframcarbidpulver, bei dem die Wolframcarbidteilchen spezielle Eigenschaften aufweisen, Verfahren zu dessen Herstellung, sowie dessen Verwendung.

Stand der Technik

Wolframcarbid zeichnet sich durch besondere Härte aus, die beinahe so hoch ist wie die von Diamant. Entsprechend ist Wolframcarbid für viele technische Anwendungen von Bedeutung, insbesondere dann, wenn hohe Härte des Werkstoffs gefragt ist, beispielsweise bei Bohrköpfen und ähnlichem. Wolframcarbid ist eine intermediäre Kristallphase aus den Elementen Wolfram und Kohlenstoff, die durch mittels Aufkohlen zwischen die Gitterplätze des Wolframs eingelagerte Kohlenstoffatome gebildet wird. Die Reaktion verläuft über $W_2C$ zu WC, vereinfacht dargestellt ausgehend vom Wolframtrioxid: $WO_3 + C \rightarrow WC$. Wolframcarbid entsteht auch durch Reduktion von Wolframoxiden mit Kohlenstoff, weswegen bei der Herstellung oft auch Wasserstoff als Reduktionsmittel eingesetzt wird.

Im Stand der Technik werden unzählige verschiedene Verfahren zur Herstellung von Wolframcarbidpulvern und unzählige spezifische Wolframcarbidpulver an sich beschrieben.

US 5,372,797 beschreibt ein Verfahren zum Bilden eines feinkörnigen Wolframcarbids, das eine Teilchengröße innerhalb eines Bereichs von 0,05 bis 0,2 μm im Durchschnitt aufweist, wobei das Verfahren das Erwärmen eines festen Wolfram enthaltenen Materials in einer fließenden Atmosphäre, die molekularen Sauerstoff und ein molekulares kohlenstoffhaltiges Wasserverbrauchendes Gas in einem festgelegten Verhältnis auf einer Mol-, Gasvolumen- oder Gaspartikeldruckbasis enthält, für einen ausreichenden Zeitraum, um im Wesentlichen das gesamte Material zu Wolframcarbid zu überführen, umfasst, wobei das Erwärmen durchgeführt wird bei einer ersten Heizrate von 5 bis 50 °C pro Minute von 25 °C bis 535 °C und einer zweiten Heizrate, die niedriger ist als die erste Heizrate von 1 bis 10 °C pro Minute von 535 °C bis zu einer Endtemperatur von 800 bis 855 °C und danach Halten bei etwa der Endtemperatur für 15 Minuten bis 3 Stunden.

JP 2005335997 beschreibt ein Verfahren zur Herstellung von Wolframcarbid ausgehend von einem Wolframpulvers mit Nanopartikelgröße, aus dem ein Wolframcarbidpulver mit einem Gesamtkohlenstoffgehalt von 6,13 Massen-% mit einem Gehalt an freiem Kohlenstoff von 0,3 Massen-% oder weniger, einem Sauerstoffgehalt von 0,7 Massen-% oder weniger, einem Eisengehalt von 200 ppm oder weniger und einer durchschnittlichen Partikelgröße von 100 nm oder weniger erhalten wird.

US 5,567,662 betrifft ein Verfahren zur Herstellung von Metallcarbidpulvern mit einer Teilchengröße von weniger als 0,2 μm. Das Verfahren umfasst das Erhitzen eines nicht statischen, festen Reaktantengemischs aus einem Metalloxid und einem Kohlenstoffausgangsmaterial auf eine erste erhöhte Temperatur, die ausreichend ist, um eine zumindest teilweise Karburierung des Gemischs zu bewirken, wobei das Erhitzen in einer nicht reduzierenden Atmosphäre mit einem Gesamtdruck von mindestens 0,1 MPa für eine ausreichende Zeit durchgeführt wird, um ein zumindest teilweise karburiertes Gemisch zu bilden, wobei das verwendete Kohlenstoffausgangsmaterial in einer Menge verwendet wird, die zu einem Gesamtkohlenstoffgehalt von weniger als der stöchiometrischen Menge zum Erzeugen des Metallcarbids führt; das Einmischen einer ausreichenden Menge eines Kohlenstoffausgangsmaterials in das teilweise karburierte Gemisch, um ein eingestelltes Gemisch zu bilden, das einen Gesamtkohlenstoffgehalt mit der stöchiometrischen Menge aufweist, die erforderlich ist, um das Metallcarbid herzustellen und karburieren des eingestellten Gemischs in einer Wasserstoff enthaltenden Atmosphäre, bei einer zweiten erhöhten Temperatur, die ausreichend ist, um Karburierung des eingestellten Gemischs zu bewirken, um das Metallcarbid mit einer Teilchengröße von weniger als 0,2 μm zu bilden.

US 5,166,103 beschreibt ein Verfahren zur Herstellung von Wolframcarbid mit einer großen Oberfläche und einer Partikelgröße im Submikronbereich durch Reaktion einer Mischung aus Wolframoxid, oder APT), Titanoxid und Kohlenstoffpulver in einem Mischreaktor. Die durch das Verfahren erhaltenen Produkte haben eine Oberfläche von mehr als 4,2 m²/g für die Mischung aus Mono-Wolframcarbid und Titancarbid und eine Partikelgröße im Bereich von 0,2 bis 0,5 μm.

US 4,984,573 offenbart ein Verfahren zur Herstellung von Siliziumcarbiden oder - metallen in Form von feinem Pulver oder Drähten. Das Verfahren umfasst das Bilden einer im Wesentlichen einheitlichen und nicht-agglomerierten Dispersion eines Mikropulvers eines Siliziumoxids oder eines carbidbildenden Metalls innerhalb einer Polymermatrix, das Carbonisieren des oxidhaltigen Polymers in einer inerten Atmosphäre und das Erhitzen des carbonisieren Produkts bei hoher Temperatur um zu bewirken, dass das Oxid mit Kohlenstoff unter Bildung eines Carbids reagiert.

US 5,071,473 beschreibt ein Objekt aus Wolframcarbid mit einem Cobaltgehalt von 6 bis 10 Gew.-%, das aus einem Wolframcarbidpulver mit einer Partikelgröße von mehr als 20 μm hergestellt wird.

Allerdings kommt es immer wieder vor, dass die bekannten Wolframcarbidpulver bei der Verarbeitung problematisch sind, z.B. wenn neue Applikationen umgesetzt werden sollen.

Weiterhin sind die bekannten Herstellungsverfahren oft nicht optimal und viele der bekannten Verfahren eignen sich nicht für die großtechnische Umsetzung.

Aufgabe

Es war daher eine Aufgabe der vorliegenden Erfindung Wolframcarbidpulver bereitzustellen, die sich von denjenigen des Stands der Technik unterscheiden, leichter verarbeitbar sind und zu Produkten, insbesondere Hartmetallgefügen, mit besseren Eigenschaften führen.

Ebenfalls Aufgabe der vorliegenden Erfindung war es, ein Verfahren bereitzustellen, mit denen Wolframcarbidpulver hergestellt werden können, die im Hinblick auf die Pulver des Standes der Technik verbesserte Eigenschaften aufweisen. Das Verfahren soll dabei großtechnisch anwendbar sein.

Nicht zuletzt sollten Verwendungen für die neuen Wolframcarbidpulver und die mittels des neuen Verfahrens hergestellten Wolframcarbidpulver gefunden werden.

Lösung

Gelöst wird ein Aspekt der Aufgabe durch Wolframcarbidpulver einer spezifischen Oberfläche nach BET, bestimmt per ASTM D 3663, zwischen 1,8 und 2,0 $m^2/g$, einer Kristallitgröße c, in den einzelnen Wolframcarbidkörnern zwischen 75 und 100 nm, röntgenographisch mittels XRD/Röntgenbeugung, Single Line, Scherrer Methode und Fourier-Peak-Transformationsauswertung mit einem NIST-zertifizierten Kristallitgrößenmuster als Referenz bestimmt, einer durchschnittlichen Korngröße d, berechnet mittels der Formel $d(nm)=0,38((m^2*nm)/g)/BET(m^2/g)*1000$ aus der spezifischen Oberfläche nach BET zwischen 186 nm und 217 nm und einer durchschnittlichen maximalen Kristallitanzahl n pro Wolframcarbidkorn, berechnet gemäß n=d/c, von 1,8 bis 2,7.

Ein anderer Aspekt der Aufgabe wird gelöst durch einen Direktcarburierungsprozess bei dem Wolframcarbidpulver ausgehend von Ammoniumparawolframat und Ruß durch thermische Behandlung von $WO_3$/RußTeilchen in zwei Schritten und anschließende Aufarbeitung hergestellt wird. Besonders gut werden verschiedene Aufgabenaspekte durch die im nachfolgenden beschriebenen Ausgestaltungen sowie die in den Ansprüchen dargestellten Ausgestaltungen gelöst.

Begriffsdefinitionen:

Im Rahmen der vorliegenden Erfindung sind alle Mengenangaben, sofern nicht anders angegeben, als Gewichtsangaben zu verstehen.

Im Rahmen der vorliegenden Erfindung werden alle Verfahrensschritte, sofern nicht anders angegeben, bei Normaldruck/Atmosphärendruck, d.h. bei 1013mbar durchgeführt.

Im Rahmen der vorliegenden Erfindung schließt die Formulierung "und/oder" sowohl jede beliebige als auch alle Kombinationen der in der jeweiligen Auflistung genannten Elemente ein.

Im Rahmen der vorliegenden Erfindung sind Temperaturangaben, sofern nichts anderes angegeben ist, in Grad Celsius (°C).

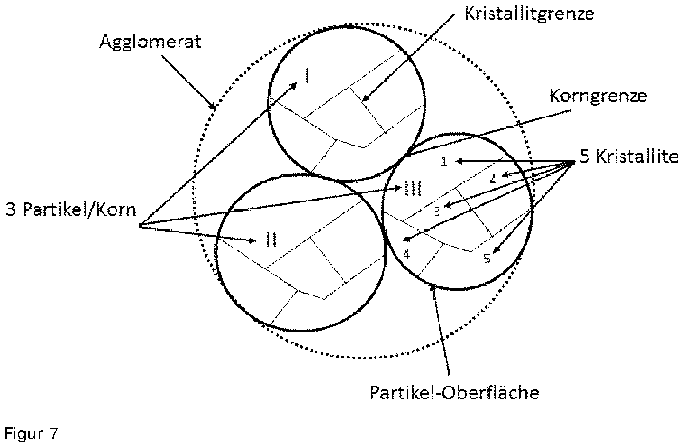

Im Rahmen der vorliegenden Erfindung werden unter "Partikel / Korn" durch eine Oberfläche zwischen Gasphase und Festphase begrenzte Gebilde verstanden. Diese können sich zu losen Agglomeraten zusammenballen, die lediglich durch Adhäsion zusammengehalten werden und beim Dispergieren in Primärpartikel getrennt werden können. Partikel / Korn können aus einem oder mehreren "Kristalliten" aufgebaut sein, die durch Kristallitgrenzen und Korngrenzen begrenzt sind. Eine Kristallitgrenze trennt Bereiche unterschiedlicher kristallographischer Orientierung von ansonsten gleicher Kristallstruktur. Der Zusammenhalt der Kristallite innerhalb eines Partikels ist deutlich stärker als der Zusammenhalt von Partikeln innerhalb eines Agglomerats. Sie können also nicht durch Dispergieren getrennt werden. Diese Zusammenhänge sind in der beigefügten Figur 7 beispielhaft graphisch veranschaulicht.

Detaillierte Beschreibung:

Gegenstand der vorliegenden Erfindung ist ein Wolframcarbidpulver mit

- einer spezifischen Oberfläche nach BET, bestimmt per ASTM D 3663, zwischen 1,8 und 2,0 $m^2/g$,
- einer Kristallitgröße c, in den einzelnen Wolframcarbidkörnern zwischen 75 und 100 nm, röntgenographisch mittels XRD/Röntgenbeugung, Single Line, Scherrer Methode und Fourier-Peak-Transformationsauswertung mit einem NIST-zertifizierten Kristallitgrößenmuster als Referenz bestimmt
- einer durchschnittliche Korngröße d, berechnet mittels der Formel $d=0,38((m^2*nm)/g)/BET(m^2/g)*1000$ aus der spezifischen Oberfläche nach BET zwischen 186 nm und 217 nm,
- einer durchschnittlichen maximalen Kristallitanzahl n pro Wolframcarbidkorn, berechnet gemäß n=d/c, 1,8 bis 2,7.

In einer Variante der vorliegenden Erfindung weist das Wolframcarbidpulver Kristallitgrößen in den einzelnen Wolframcarbidkörnern zwischen 75 und 95 nm auf.

In einer Variante der vorliegenden Erfindung wird das Wolframcarbidpulver nach einem Direktcarburierungsprozess hergestellt.

Weiterhin Gegenstand der vorliegenden Erfindung ist mithin ein Wolframcarbidpulver, wie oben beschreiben, das durch folgenden Direktcarburierungsprozess, der die folgenden Schritte in der angegebenen Reihenfolge umfasst oder aus diesen besteht, hergestellt wird:

a) Bereitstellen von Ammoniumparawolframat und Kalzinieren zu $WO_3$ mit anschließendem Deagglomerieren und gegebenenfalls Klassieren;
b) Vermischen und Verkneten des in Schritt a) hergestellten $WO_3$ mit Ruß, Wasser und organischem Binder;
c) Extrudieren des in Schritt b) hergestellten Produktes zu Stränglingen mit einer Länge von kleiner oder gleich 10 mm und anschließende Trocknung;
d) thermische Umsetzung des $WO_3$/Ruß-Granulates in einem Reaktionsofen, bevorzugt Drehrohrofen oder Durchschubofen, bei 900 bis 1200°C in Gegenwart einer Minimalmenge Argon zu einem Wolframcarbid-Precursor,
d1) optional abkühlen lassen des Materials auf Raumtemperatur,
e) thermische Behandlung des Precursors in einem Schubofen bei Temperaturen von 1300 bis 2000°C unter Wasserstoffatmosphäre;
f) Deagglomeration und gegebenenfalls Klassieren des Wolframcarbids und Homogenisierung.

Diese Wolframcarbidpulver werden im Rahmen der vorliegenden Anmeldung als erfindungsgemäße Wolframcarbidpulver oder erfindungsgemäße Pulver bezeichnet.

Ferner ist Gegenstand der vorliegenden Erfindung ein Direktcarburierungsprozess zur Herstellung von erfindungsgemäßem Wolframcarbidpulver umfassend die folgenden Schritte oder bestehend aus diesen:

a) Bereitstellen von Ammoniumparawolframat und Kalzinieren zu $WO_3$ mit anschließendem Deagglomerieren und Klassierung;
b) Vermischen und Verkneten des in Schritt a) hergestellten $WO_3$ mit Ruß, Wasser und organischem Binder;
c) Extrudieren des in Schritt b) hergestellten Produktes zu Stränglingen mit einer Länge von kleiner oder gleich 10 mm und anschließende Trocknung;
d) thermische Umsetzung des $WO_3$/Ruß-Granulates in einem Reaktionsofen, bevorzugt Drehrohrofen oder Durchschubofen, bei 900 bei 1200°C in Gegenwart einer Minimalmenge Argon zu einem Wolframcarbid-Precursor;
e) thermische Behandlung des Precursors in einem Schubofen bei Temperaturen von 1300 bis 2000°C unter Wasserstoffatmosphäre;
f) Deagglomeration und Klassierung des Wolframcarbids und Homogenisierung.

Dieser Direktcarburierungsprozess wird im Rahmen der vorliegenden Anmeldung auch synonym als erfindungsgemäßer Direktcarburierungsprozess, erfindungsgemäßer Carburierungsprozess oder erfindungsgemäßes Verfahren bezeichnet. Die Prozessschritte und -bedingungen sind die gleichen, wie oben für das erfindungsgemäße Wolframcarbidpulver hergestellt mittels Direktcarburierungsprozess angegeben.

Nicht zuletzt ist auch Gegenstand der vorliegenden Erfindung die Verwendung des oben beschriebenen erfindungsgemäßen Wolframcarbidpulvers oder eines Wolframcarbidpulvers, das wie oben beschrieben mit dem erfindungsgemäßen Verfahren hergestellt wurde.

In einer Ausgestaltung der vorliegenden Erfindung ist die Verwendung ausgewählt aus der Gruppe bestehend aus der Verwendung für

- die Herstellung von Hartmetallen, gegebenenfalls in Kombination mit metallischen Bindern Fe, Co, Ni, bevorzugt

a) WC/Co-basierte-Hartmetalle,
b) WC/Co-basierten-Hartmetalle unter Verwendung von Kornwachstumshemmern (VC, $Cr_3C_2$, TaC, TiC),
c) Cermets und P-Hartmetalle in Kombination mit anderen Carbiden der Elemente Ti, Ta, Zr, Hf, Mo, Nb, W, Cr, Fe,
d) Hartmetalle auf Basis von Hartstoff-Nitriden,
e) Feinstkornhartmetalle mit Härten nach Vickers HV30 = größer 1600,
f) binderlose Hartmetalle (HM-Binderanteil: kleiner 2%)

- Zerspanungswerkzeuge wie z.B. Bohrer, Fräser, Wendeschneidplatten oder Hobelmesser,
- hochbelastete Bauteile wie für Bohrköpfe,
- den Uhrenbau,

- Einsatz als Neutronenreflektor,
- panzerbrechende Geschosse,
- Kugelschreiberkugeln,
- Reifen- oder Schuh-Spikes,
- chirurgische Instrumente.

Die erfindungsgemäße Wolframcarbidpulver sind in einer Variante charakterisiert durch einzigartige Kristallitgröße im Vergleich zur Korngröße, charakterisiert durch eine einzigartige Kristallitanzahl pro Korn zwischen 1,8 und 2,7 und Korngröße, charakterisiert durch BET-Oberfläche im Bereich von 1,8-2,0 $m^2$/g.

In Schritt a) werden in einigen Ausgestaltungen, die auch bevorzugt sein können, die folgenden Parameter eingehalten, wobei die jeweiligen Parameter unabhängig voneinander miteinander kombiniert werden können:

- Die Kalzination wird bei Temperaturen zwischen 300°C bis 1000°C durchgeführt. Der eingestellte Druck ist in einem weiten Bereich auswählbar, es können bevorzugt Drücke von -50 mbar bis +50 mbar (ausgehend vom Atmosphärendruck) eingestellt werden. Besonders bevorzugt ist Umgebungsdruck, d.h. Atmosphärendruck, der nur durch die Ofenatmosphäre beeinflusst wird.
- Eine Variante sind Wolframoxide, die vollständig oxidiert sind und ein W zu O Verhältnis von größer als 1 (W) zu 2.9 (O) aufweisen (auf Basis der chemischen Formel $WO_3$).
- Die Deagglomeration erfolgt mittels Mahlaggregaten, wie bevorzugt Brechern, Schwingmühlen, Strahlmühlen, Kugelmühlen, Walzenmühlen, Stabmühlen, Hammermühlen, Prallmühlen, Sturzmühlen, Stiftmühlen, Stiftscheibenmühlen oder Planetenmühlen.
- Optional erfolgt eine Klassierung mit einem Zielwert von einer Korngrößenverteilung mit einem $d_{98}$-Wert von kleiner oder gleich 30 $\mu$m, bestimmt mittels Partikelgrößenbestimmung mit Laserbeugung nach ISO-Norm 13320 (2009) (Laser Diffraction Mastersizer).

In Schritt b) werden in einigen Ausgestaltungen, die auch bevorzugt sein können, die folgenden Parameter eingehalten, wobei die jeweiligen Parameter unabhängig voneinander miteinander kombiniert werden können:

- Das Vermischen und Verkneten erfolgt bei einer Temperatur von 50°C bis 120°C.
- Die Dauer von Vermischen und Verkneten beträgt zwischen 3 und 20 Minuten (bei kontinuierlichem Prozess) und zwischen 1 und 5 Stunden (bei diskontinuierlichem/batchweisem Prozess).
- Bevorzugt sind

    1.) Kneter/Extruder, bevorzugt horizontale Kneter, vertikale Kneter, kontinuierliche Kneter - z.B. vom Typ Stempelkneter, Walzenkneter, Doppel-Z-Kneter, Wendelkneter),
    oder
    2.) Intensiv-Mischer, bevorzugt EIRICH-Mischer.

- Der organische Binder dient zum Verbinden von $WO_3$ mit Ruß und um die Granulatfestigkeit zu garantieren. Geeignete Binder bestehen aus den Elementen Kohlenstoff, Wasserstoff und Sauerstoff und weisen eine OH- oder COOH-Gruppe auf, damit die Mischbarkeit mit Wasser gegeben ist. Bevorzugte Beispiele sind Polyvinylalkohol (PVA) oder Polyacrylsäure (PAA).

In Schritt c) werden in einigen Ausgestaltungen, die auch bevorzugt sein können, die folgenden Parameter eingehalten, wobei die jeweiligen Parameter unabhängig voneinander miteinander kombiniert werden können; dabei werden stabile Granulate erhalten:

- Die Extrusion erfolgt indem das Gemisch aus $WO_3$/Ruß durch eine Lochscheibe gepresst und dabei auf eine definierte Länge von kleiner/gleich 10mm gebracht wird, bevorzugt z.B. durch Abscheren mittels rotierendem Schneidmesser.
- Die Trocknungstemperatur beträgt zwischen 80°C und 200°C, die Trocknungszeit zwischen 1 Stunde und 24 Stunden.

In Schritt d) werden in einigen Ausgestaltungen, die auch bevorzugt sein können, die folgenden Parameter eingehalten, wobei die jeweiligen Parameter unabhängig voneinander miteinander kombiniert werden können:

- Der Reaktionsofen ist ein Drehrohrofen oder Durchschubofen.
- Der Druck liegt bei 2 bis 50 mbar atmosphärischer Überdruck.

- Die Temperatur wird für 30 bis 600 Minuten gehalten.
- Die eingesetzte Menge Argon beträgt zwischen 0.01 und 20 Volumenprozent der Ofenatmosphäre.
- Eine gleichmäßige homogene Erwärmung des Materials wird bevorzugt.

In dem optionalen Schritt d1) werden in einigen Ausgestaltungen, die auch bevorzugt sein können, die folgenden Parameter eingehalten, wobei die jeweiligen Parameter unabhängig voneinander miteinander kombiniert werden können:

- Das Material wird auf Raumtemperatur abgekühlt.
- Eine atmosphärische Trennung der 1. und 2. Prozessstufen wird eingestellt.

In Schritt e) werden in einigen Ausgestaltungen, die auch bevorzugt sein können, die folgenden Parameter eingehalten:

- Der Druck liegt bei 2 bis 50 mbar atmosphärischer Überdruck. Die eingesetzte Menge Wasserstoff beträgt bevorzugt zwischen 60 und 100 Volumenprozent der Ofenatmosphäre.
- Die Temperatur wird für 30 bis 600 Minuten gehalten.

In Schritt f) werden in einigen Ausgestaltungen, die auch bevorzugt sein können, die folgenden Parameter eingehalten, wobei die jeweiligen Parameter unabhängig voneinander miteinander kombiniert werden können:

- Die Deagglomeration erfolgt mittels Mahlaggregaten, bevorzugt Brechern, Schwingmühlen, Strahlmühlen, Kugelmühlen, Walzenmühlen, Stabmühlen, Hammermühlen, Prallmühlen, Sturzmühlen, Stiftmühlen, Stiftscheibenmühlen oder Planetenmühlen.
- Die Klassierung erfolgt bevorzugt mittels Sichter auf einen Zielwert einer Korngrößenverteilung mit einem $d_{98}$-Wert von kleiner oder gleich 5 $\mu$m bestimmt mittels Partikelgrößenbestimmung mit Laserbeugung nach ISO-Norm 13320 (2009) (Laser Diffraction Mastersizer). Dabei gibt der Wert der Klassierung die maximale Größe der Agglomerate an und besitzt die Funktion einer "Schutzsiebung".
- Die Homogenisierung erfolgt mit einer Mischzeit zwischen 10 Minuten und 240 Minuten in einem geeigneten Mischer, bevorzugt Freifallmischer, Zwangsmischer, Hosenrohrmischer, Rührwerkmischer oder Schaufelmischer.

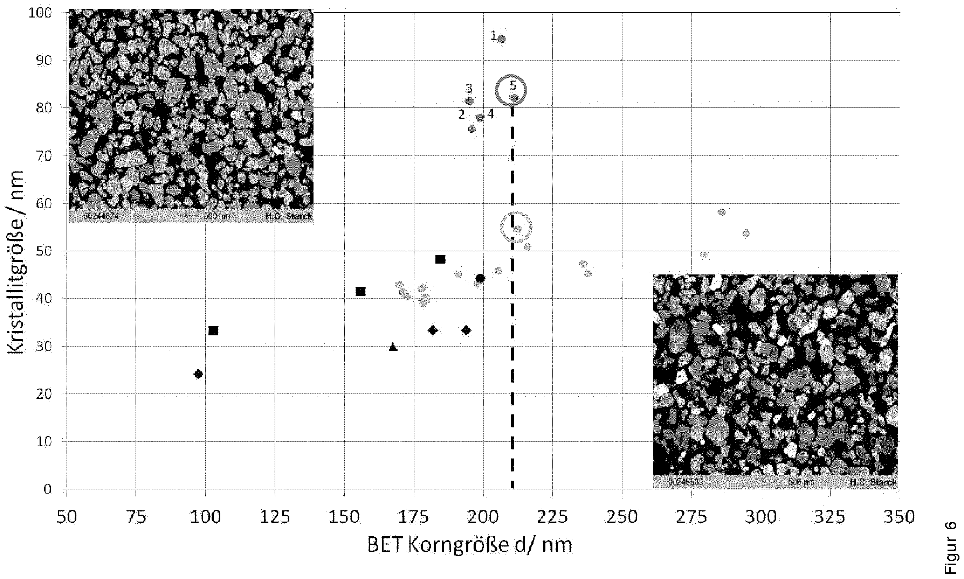

Im Unterschied zu dem aus der JPH03208811 bekannten Direktcarburierungsverfahren werden bei dem erfindungsgemäßen Verfahren WO$_3$/Ruß-Granulate mit speziellen Eigenschaften (Stränglinge einer Länge von kleiner oder gleich 10 mm) eingesetzt. Außerdem muss erfindungsgemäß in der carbidischen Umsetzungsreaktion in der ersten thermischen Umsetzung keine Stickstoffatmosphäre eingesetzt werden. Zudem wird in der zweiten thermischen Umsetzung erfindungsgemäß ein Schubofen verwendet und kein Drehrohrofen. Überraschend wurde gefunden, dass mit dem erfindungsgemäßen Verfahren über einen Direktcarburierungsprozess Pulver soweit kontrolliert hergestellt werden können, dass deren spezifische Oberflächen in den Bereich der feinsten konventionell hergestellten Wolframcarbidpulver von etwa 2 m$^2$/g kommen. Ferner konnte mit keinem bekannten Verfahren ein Verhältnis von Kristallitgröße zu BET erreicht werden, wie mit der vorliegenden Erfindung. Dies ist z.B. auch aus Figur 6 ersichtlich.

Ein Vorteil der vorliegenden Erfindung besteht darin, dass ein Verfahren zur Herstellung eines Wolframcarbidpulvers mit

- einer Kristallitgröße von 75-100 nm bei
- einer BET-Oberfläche von 1,8-2,0 m$^2$/g und bei
- einer Kristallitanzahl von maximal 2,7

über einen Direktcarburierungsprozess entwickelt wurde, welches (a) für die großtechnische Herstellung geeignet ist und (b) dem Streben und Ansprüchen der wirtschaftlichen, ökonomischen und ökologischen Randbedingungen erfüllt. Ferner konnte mittels dieser Erfindung (c) Pulver mit einzigartigen PulverEigenschaften bereitgestellt werden, die zu vorteilhaften Anwendungseigenschaften führen; beispielsweise zu einer Steigerung der Homogenität in Hartmetallgefügen und zu einer Steigerung der Festigkeit sowie Erhöhung der Bruchzähigkeit führen.

Es ist bekannt, dass eine Steigerung der Homogenität im (Hartmetall-)Gefüge zu einer Steigerung der Festigkeit und zur Erhöhung der Bruchzähigkeit führen - insofern sind die Pulver der vorliegenden Erfindung hervorragend zur Herstellung von Hartmetallgefügen geeignet.

Eine Variante der vorliegenden Erfindung ist ein Direktcarburierungsprozess, der aus den folgenden Schritten in der angegebenen Reihenfolge besteht:

a) Bereitstellen von Ammoniumparawolframat und Kalzinieren bei 300°C bis 1000°C und Umgebungsdruck zu $WO_3$ mit anschließendem Deagglomerieren in einem Mahlaggregat ausgewählt aus der Gruppe bestehend aus Brechern, Schwingmühlen, Strahlmühlen, Kugelmühlen, Walzenmühlen, Stabmühlen, Hammermühlen, Prallmühlen, Sturzmühlen, Stiftmühlen, Stiftscheibenmühlen oder Planetenmühlen und Klassieren mit einem Zielwert von einer Korngrößenverteilung mit einem $d_{98}$-Wert von kleiner oder gleich 30 $\mu$m, bestimmt mittels Partikelgrößenbestimmung mit Laserbeugung nach ISO-Norm 13320 (2009) (Laser Diffraction Mastersizer).

b) Vermischen und Verkneten des in Schritt a) hergestellten $WO_3$ mit Ruß, Wasser und organischem Binder zwischen 3 bis 20 Minuten (bei kontinuierlichem Prozess) und zwischen 1 bis 5 Stunden (bei diskontinuierlichem/batchweisem Prozess) und bei einer Temperatur von 50°C bis 120°C;

c) Extrudieren des in Schritt b) hergestellten Produktes zu Stränglingen mit einer Länge von kleiner oder gleich 10 mm und anschließende Trocknung bei 80°C bis 200°C für eine Dauer zwischen 1 Stunde und 24 Stunden;

d) thermische Umsetzung des $WO_3$/Ruß-Granulates in einem Drehrohrofen oder Durchschubofen bei einer Temperatur zwischen 900°C und 1200°C, bei 2 mbar bis 50 mbar atmosphärischem Überdruck in Gegenwart von 0,01 bis 20 Volumenprozent Argon, bezogen auf die Ofenatmosphäre, für 30 Minuten bis 600 Minuten zu einem Wolframcarbid-Precursor,

d1) Abkühlen lassen des Materials auf Raumtemperatur,

e) thermische Behandlung des Precursors in einem Schubofen bei Temperaturen von 1300 bis 2000°C unter Wasserstoffatmosphäre bei 2 mbar bis 50 mbar atmosphärischem Überdruck für 30 Minuten bis 600 Minuten;

f) Deagglomeration des Wolframcarbids in einem Mahlaggregat ausgewählt aus der Gruppe bestehend aus Brechern, Schwingmühlen, Strahlmühlen, Kugelmühlen, Walzenmühlen, Stabmühlen, Hammermühlen, Prallmühlen, Sturzmühlen, Stiftmühlen, Stiftscheibenmühlen oder Planetenmühlen; Klassieren mit einem Zielwert von einer Korngrößenverteilung mit einem $d_{98}$-Wert von kleiner oder gleich 5 $\mu$m, bestimmt mittels Partikelgrößenbestimmung mit Laserbeugung nach ISO-Norm 13320 (2009) (Laser Diffraction Mastersizer); und Homogenisierung mit einer Mischzeit zwischen 10 Minuten und 240 Minuten in einem Mischer ausgewählt aus der Gruppe bestehend aus Freifallmischer, Zwangsmischer, Hosenrohrmischer, Rührwerkmischer oder Schaufelmischer.

Eine andere Variante der vorliegenden Erfindung ist ein Wolframcarbidpulver hergestellt mit diesem Direktcarburierungsprozess.

Die verschiedenen Ausgestaltungen und Varianten der vorliegenden Erfindung, z.B. aber nicht ausschließlich diejenigen der verschiedenen abhängigen Ansprüche, können dabei in beliebiger Art und Weise miteinander kombiniert werden.

Die Erfindung wird nun unter Bezugnahme auf die folgenden nicht-limitierenden Beispiele und die Figuren erläutert.

Beschreibung der Figuren:

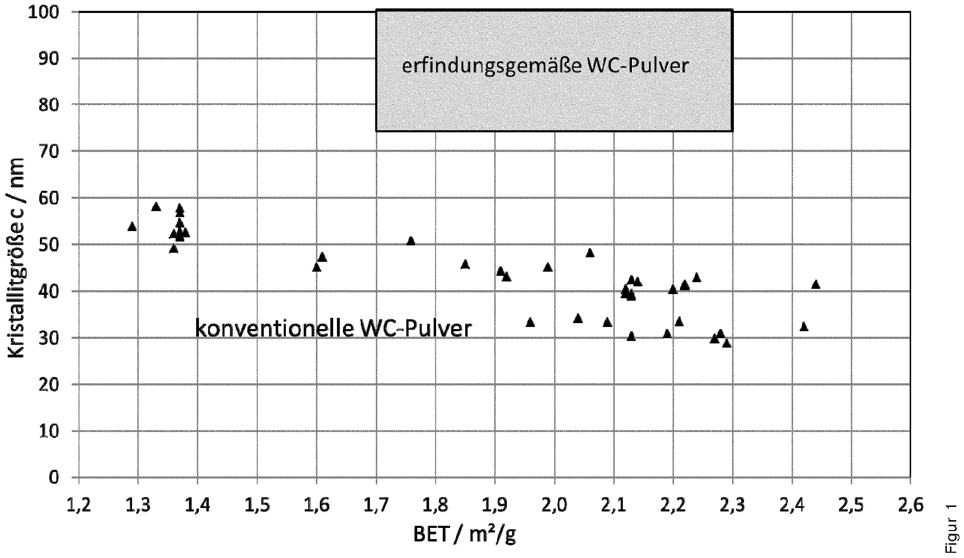

Figur 1 zeigt den Zusammenhang von Kristallitgröße und BET-Oberfläche von Wolframcarbidpulvern des Standes der Technik (schwarze Dreiecke) und der vorliegenden Erfindung (repräsentiert durch die graue Fläche). Man sieht, dass die Pulver der vorliegenden Erfindung größere Kristallite ausbilden als die Pulver des Standes der Technik.

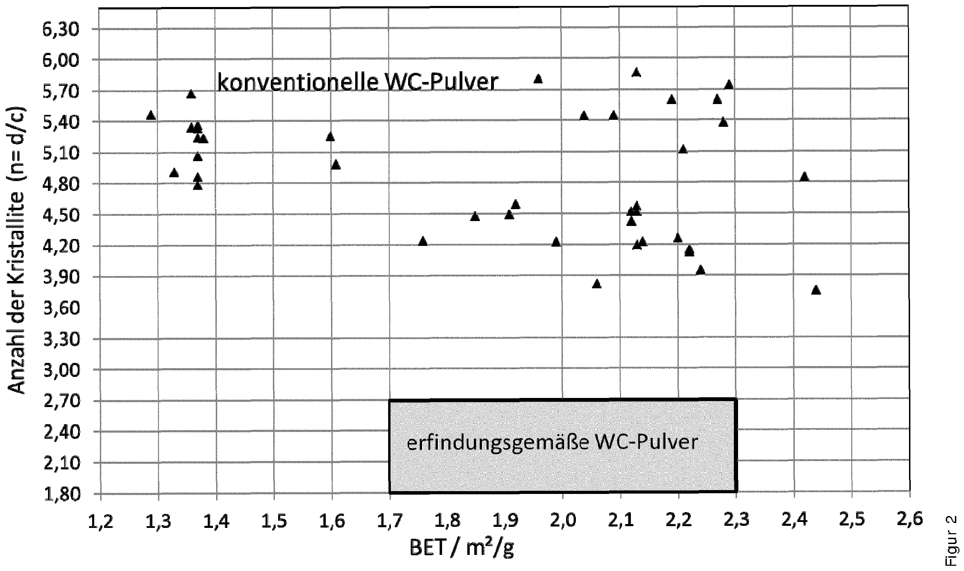

Figur 2 zeigt den Zusammenhang von Kristallitanzahl und BET-Oberfläche von Wolframcarbidpulvern des Standes der Technik (schwarze Dreiecke) und der vorliegenden Erfindung (repräsentiert durch die graue Fläche). Man sieht, dass die Pulver der vorliegenden Erfindung weniger Kristallite ausbilden als die Pulver des Standes der Technik.

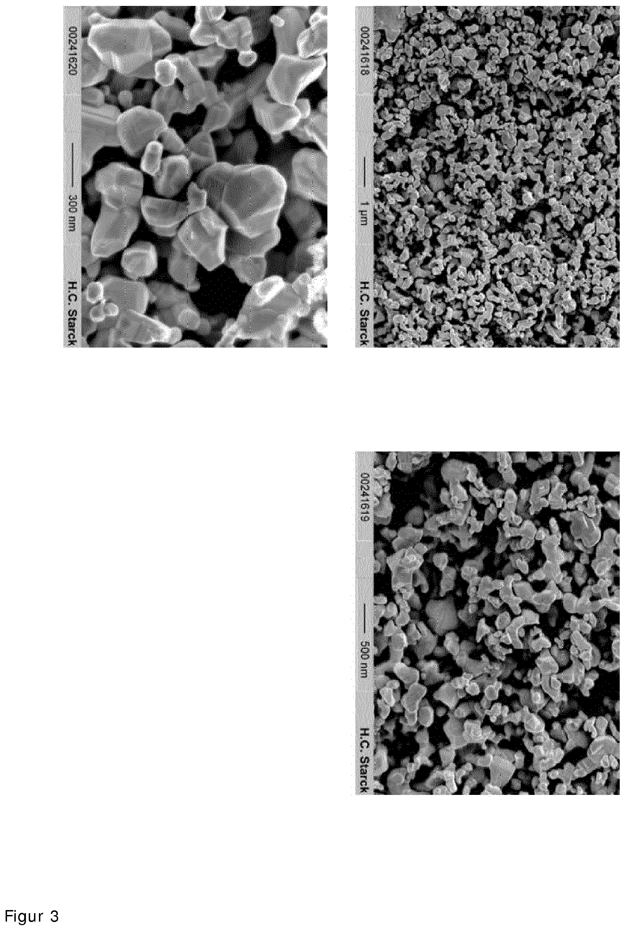

Figur 3 zeigt FESEM-Aufnahmen (Field Emission Scanning Electron Microscopy) von Wolframcarbidpulvern der vorliegenden Erfindung (gemäß Beispiel 1, siehe unten) in verschiedenen Vergrößerungen.

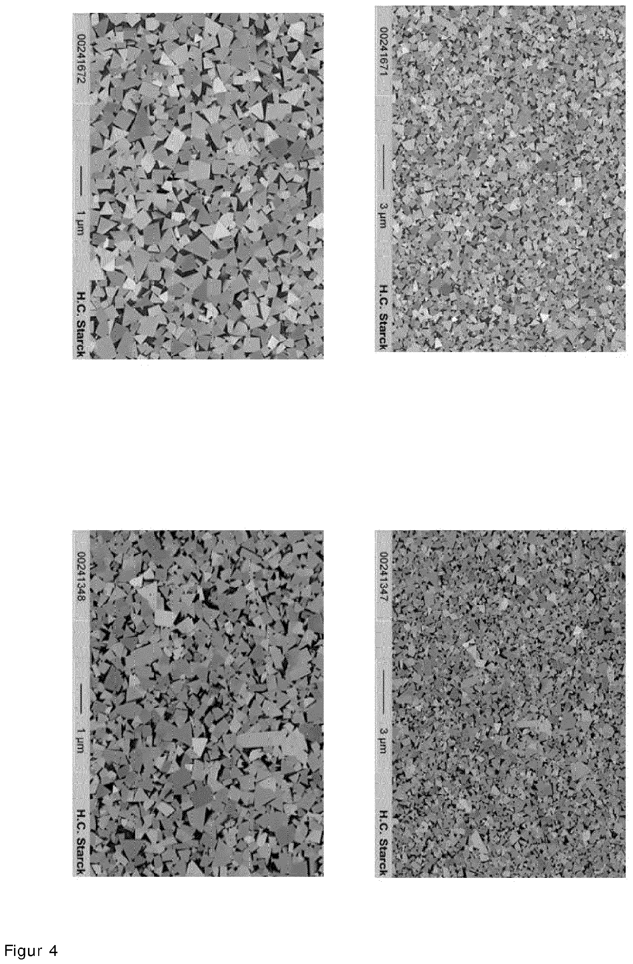

Figur 4 zeigt einen Vergleich von einem Hartmetallgefüge hergestellt mit einem erfindungsgemäßen Pulver (gemäß Beispiel 1, siehe unten) auf der linken Seite und einem Hartmetallgefüge hergestellt aus einem Wolframcarbidpulver gemäß Stand der Technik (WC DS 50 der Firma H.C. Starck) auf der rechten Seite. Man erkennt deutlich, dass die mit dem erfindungsgemäßen Pulver hergestellten Hartmetallgefüge homogener sind.

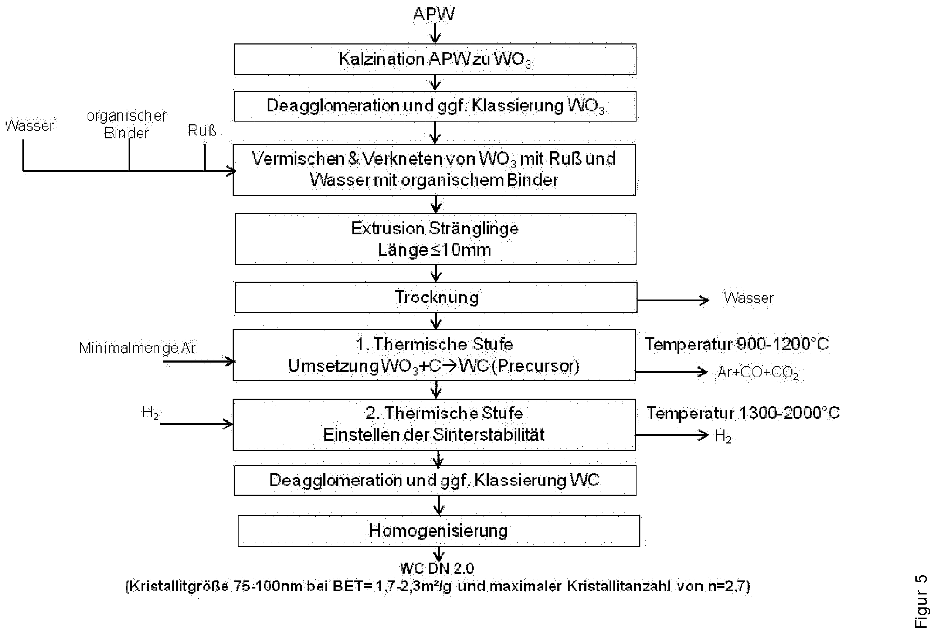

Figur 5 zeigt ein Flussdiagramm einer erfindungsgemäßen Ausgestaltung des erfindungsgemäßen Verfahrens.

Figur 6 zeigt den Zusammenhang von Kristallitgröße und per BET ermittelter Korngröße von Wolframcarbidpulvern der vorliegenden Erfindung (repräsentiert durch die mit Zahlen markierten Messpunkte 1 bis 5) und des Standes der Technik (repräsentiert durch die übrigen Messpunkte; dabei sind die Punkte Produkte der Firma H.C. Starck, die übrigen Produkte anderer Hersteller). Man sieht ferner, dass die Pulver der vorliegenden Erfindung (eingesetzte Cu-Schliff-Aufnahme links oben - zugehörig zu Messpunkt 5) zu Produkten führen, die höhere Kristallität, weniger Kristallite pro Partikel, weniger Partikelstörungen und ein homogeneres Gefüge aufweisen, als die Pulver des Standes der Technik (eingesetzte Cu-Schliff-Aufnahme rechts unten - zugehörig zu eingekreistem Messpunkt bei Koordinaten ca. 55/210).
Figur 7 illustriert Zusammenhänge zwischen Kristallit, Partikel / Korn und Agglomerat.

Beispiele:

Herstellungsweg Nr. 1 "batchweise" (Beispiele 2 und 3):

Ammoniumparawolframat wurde bei Temperaturen von 300°C-1000°C und Atmosphärendruck zu $WO_3$ kalziniert und anschließend bei Raumtemperatur mittels Stiftscheibenmühle deagglomeriert und auf einen $d_{98}$-Zielwert einer Korngrößenverteilung von kleiner als 30 μm klassiert (per Partikelgrößenbestimmung mit Laserbeugung nach ISO-Norm 13320 (2009)). Das deagglomerierte Wolframoxid wurde dann mit Ruß, Wasser und einem organischen Binder (Polyvinylalkohol, PVA) vermischt und für 120 Minuten bei 80°C mit einem Doppel-Z-Kneter verknetet und danach mittels Lochscheibe und rotierendem Schneidmesser zu Stränglingen extrudiert und auf eine Länge von kleiner als 10 mm geschnitten. Nachfolgend wurden diese Stränglinge für 24 Stunden bei 110°C getrocknet. Die Stränglinge wurden dann zur Herstellung der ersten thermischen Stufe in einen Reaktionsofen gefördert (Graphitschiffchen-Batchofen, geringe Betthöhe, Monolage der Stänglinge) und dort homogen erwärmt. Dort erfolgte die Umsetzung gemäß der (vereinfachten) Reaktionsgleichung: $WO_3 + C \rightarrow WC$. Dabei entstanden ebenfalls die Gase CO und $CO_2$. Die Temperaturen lagen zwischen 900°C und 1200°C (wobei bis 800°C mit maximaler Heizleistung erwärmt wurde, anschließend mit einer Heizleistung von 10K/min auf 1200°C), der Druck lag bei 5 mbar und die Ofenatmosphäre enthielt 12 Volumenprozent Argon. Das Produkt wurde dann in einen Schubofen (Schiffchenstoß-Ofen) überführt. Zum Einstellen der Sinterstabilität wurden in dieser zweiten thermischen Stufe 90 Volumenprozent Wasserstoff zugegeben und für 350 Minuten bei einem Druck von 3 mbar bis 5 mbar bei Temperaturen zwischen 1300 und 2000°C gehalten. Im Anschluss folgte die Deagglomeration mittels Stiftscheibenmühle bis zu einem Zielwert von einer Korngrößenverteilung mit einem $d_{98}$-Wert von kleiner oder gleich 5 μm (Partikelgrößen bestimmt mittels Laserbeugung nach ISO-Norm 13320 (2009)). Eine Klassierung erfolgte nicht. Letztlich folgte die Homogenisierung des WC-Pulvers für 30 Minuten in einem Freifallmischer des Typs Doppelkonusmischer.

Herstellungsweg Nr. 2 "kontinuierlich" (Beispiele 1, 4 und 5):

Ammoniumparawolframat wurde bei Temperaturen von 300°C-1000°C und Atmosphärendruck zu $WO_3$ kalziniert und anschließend bei Raumtemperatur mittels Strahlmühle deagglomeriert und auf einen $d_{98}$-Zielwert einer Korngrößenverteilung von kleiner als 30 μm klassiert (Partikelgrößenbestimmung mit Laserbeugung nach ISO-Norm 13320 (2009)). Das deagglomerierte Wolframoxid wurde dann mit Ruß, Wasser und einem organischen Binder (Polyacrylsäure, PAA) vermischt und für 120 Minuten bei 80°C in einem Doppel-Z-Kneter verknetet und danach mittels Lochscheibe und rotierendem Schneidmesser zu Stränglingen extrudiert und auf eine Länge von kleiner als 10 mm geschnitten. Nachfolgend wurden diese Stränglinge für 24 Stunden bei 110°C getrocknet. Die Stränglinge wurden dann zur Herstellung der ersten thermischen Stufe in einen Reaktionsofen gefördert (Drehrohrofen) und dort homogen erwärmt. Dort erfolgte die Umsetzung gemäß der (vereinfachten) Reaktionsgleichung: $WO_3 + C \rightarrow WC$. Dabei entstanden ebenfalls die Gase CO und $CO_2$. Die Temperaturen lagen zwischen 900°C und 1200°C und der Druck bei 5 mbar und die Ofenatmosphäre enthielt 8 Volumenprozent Argon. Das Produkt wurde dann in einen Schubofen (Schiffchenstoß-Ofen) überführt. Zum Einstellen der Sinterstabilität wurde in dieser zweiten thermischen Stufe 90 Volumenprozent Wasserstoff zugegeben und für 350 Minuten bei einem Druck von 3 bis 5 mbar und bei Temperaturen zwischen 1300 und 2000°C gehalten.
Im Anschluss folgte die Deagglomeration und Klassierung mittels Strahlmühle mit eingebautem Sichter bis zu einem Zielwert von einer Korngrößenverteilung mit einem $d_{98}$-Wert von kleiner oder gleich 5 μm (Partikelgrößen bestimmt mittels Laserbeugung nach ISO-Norm 13320 (2009)) und letztlich die Homogenisierung des WC-Pulvers für 30 Minuten in einem Freifallmischer des Typs Doppelkonusmischer.
Die Verfahrensschritte der Herstellwege Nr. 1 (batchweise) und Nr. 2 (kontinuierlich) sind im Prinzip beliebig kombinierbar und austauschbar, sofern die Reihenfolge, wie in Figur 5 veranschaulicht, eingehalten wird, um vergleichbare Stoffeigenschaften der erfindungsgemäßen Wolframcarbidpulver zu erzielen.
Mit diesen beiden Verfahren wurden fünf verschiedene Chargen Wolframcarbidpulver (Beispiele 1 bis 5) hergestellt, deren Eigenschaften und Kenndaten in der folgenden Tabelle 1 zusammengefasst sind:

Tabelle 1:

|  | Bsp. 1 | Bsp. 2 | Bsp. 3 | Bsp. 4 | Bsp. 5 | Einheit |
|---|---|---|---|---|---|---|
| Kohlenstoff, gesamt | 6,18 | 6,14 | 6,14 | 6,16 | 6,12 | % |
| Kohlenstoff, frei | 0,05 | 0,03 | 0,02 | 0,05 | 0,02 | % |

(fortgesetzt)

| | Bsp. 1 | Bsp. 2 | Bsp. 3 | Bsp. 4 | Bsp. 5 | Einheit |
|---|---|---|---|---|---|---|
| Kohlenstoff, gebunden | 6,13 | 6,11 | 6,12 | 6,11 | 6,10 | % |
| Sauerstoff | 0,15 | 0,14 | 0,12 | 0,16 | 0,15 | % |
| FSSS lab milled* | 0,62 | 0,59 | 0,59 | 0,60 | 0,63 | $\mu$m |
| BET | 1,84 | 1,94 | 1,96 | 1,91 | 1,80 | $m^2/g$ |
| BET berechnete Korngröße | 207 | 196 | 194 | 199 | 211 | nm |
| d10 | 0,41 | 0,34 | 0,34 | 0,32 | 0,35 | $\mu$m |
| d50 | 0,79 | 0,62 | 0,61 | 0,61 | 0,65 | $\mu$m |
| d90 | 1,42 | 1,12 | 1,10 | 1,14 | 1,13 | $\mu$m |
| d95 | 1,67 | 1,28 | 1,27 | 1,32 | 1,28 | $\mu$m |
| Kristallitgröße | 94,5 | 75,7 | 81,5 | 78,0 | 82,2 | nm |
| Kristallitanzahl | 2,19 | 2,59 | 2,38 | 2,55 | 2,57 | |
| * mittels Fisher Sub-Sieve Sizer bestimmt | | | | | | |

Ein direkter Vergleich eines nach der oben angeführten Herstellvorschrift hergestellten Wolframcarbidpulvers (Beispiel 1) mit einem nach einem konventionellen Verfahren hergestellten Pulver (WC DS 50 der Firma H.C. Starck; ausgehend von Wolframmetallpulver und Ruß) findet sich in der folgenden Tabelle 2:

Tabelle 2:

| | Beispiel 1 | WC DS 50 | Einheit |
|---|---|---|---|
| Kohlenstoff, gesamt | 6,18 | 6,10 | % |
| Kohlenstoff, frei | 0,05 | 0,03 | % |
| Kohlenstoff, gebunden | 6,13 | 6,07 | % |
| Sauerstoff | 0,15 | 0,29 | % |
| BET | 1,84 | 2,13 | $m^2/g$ |
| BET berechnete Korngröße | 207 | 178 | nm |
| d10 | 0,41 | 0,32 | $\mu$m |
| d50 | 0,79 | 0,62 | $\mu$m |
| d90 | 1,42 | 1,16 | $\mu$m |
| d95 | 1,67 | 1,35 | $\mu$m |
| Schüttdichte | 26 | 35 | $g/inch^3$ |
| Kristallitgröße | 94,5 | 39,0 | nm |
| Kristallitanzahl | 2,19 | 4,57 | |
| Hartmetalleigenschaften<br>Zusammensetzung: WC 86,8%, Co 12%, 0,4% VC, 0,8 % $Cr_3C_2$<br>Attritormahlung, Sinterung: 60 min/1460°C/Vakuum | | | |
| Dichte | 14,14 | 14,15 | $g/cm^3$ |
| Härte | 1661 | 1680 | HV30 |
| Rockwell | 92,2 | 92,3 | |
| Koerzitivkraft | 298 | 316 | Oe |
| Magnetische Sättigung | 192 | 185 | $Gcm^3/g$ |

(fortgesetzt)

| | Beispiel 1 | WC DS 50 | Einheit |
|---|---|---|---|
| Relative magnetische Sättigung | 79 | 76 | % |
| Kornwachstum | 0-1=2-3$\mu$m | 0-1=2-3$\mu$m | |

Die WC-Kristallitgrößen wurden via XRD (Röntgenbeugung, Single Line) für alle untersuchten Muster (Scherrer Methode, Fourier-Peak-Tansformationsauswertung) gemessen. Ein NIST-zertifiziertes Kristallitgrößenmuster (Lanthan-hexaborid $LaB_6$) wurde als Referenz verwendet. Alle untersuchten Muster sind auf dem gleichen Gerät vermessen worden, um Peak-Verbreiterungen, verursacht durch Messsystemungenauigkeiten und Messabweichungen, auszuschließen.

Die Röntgenbeugung ist eine allgemein bekannte Methode zur Messung der Kristallitgröße. Sie liefert zuverlässig eine durchschnittliche Kristallitgröße, ausgehend von Breite und Höhe der Peakcharakteristik.

Über die BET Oberfläche wurde die Korngröße d nach folgender Formel berechnet:

$$\text{BET-Korngröße } \mathbf{d} \text{ (in nm)} = 0{,}38((m^2*nm)/g)/BET(m^2/g)*1000.$$

Die Kristallitanzahl n wurde berechnet aus der über die BET Oberfläche berechneten Korngröße d sowie der Kristallitgröße c, welche röntgenographisch ermittelt wurde, nach folgender Formel:

$$\text{Kristallitanzahl } n = d / c$$

Bsp.:

$$\text{Kristallitanzahl } n = 207 \text{ nm} / 94{,}5 \text{ nm} = 2{,}19$$

Zum Vergleich wurden verschiedene Fremdmuster und interne WC-Vergleichspulver, hergestellt auf konventionellem Weg, untersucht. Die Kristallitgrößen der Fremdmuster und internen WC-Vergleichspulver mit verschiedenen BET Korngrößen lagen immer im Bereich zwischen >24nm und <60nm. Dies ist in Figur 6 wiedergegeben.

Die zugehörige Kristallitanzahlen pro WC-Korn betrugen vereinzelt minimal n=3,1, meistens jedoch wurde Werte im Bereich von n=3,7 - 5,9 ermittelt. Keines der untersuchten Pulver hatte eine annähernd große Kristallitgröße bzw. weniger als n=2,7 Kristallite pro WC-Korn wie das erfindungsgemäße Wolframcarbidpulver.

Dieser enorme Unterschied zwischen den erfindungsgemäßen Wolframcarbidpulvern und denen des bisherigen Standes der Technik ist auf den neu entwickelten Verfahrensweg zurückzuführen.

Die typischen Pulvereigenschaften (mit Ausnahme von Kristallitgröße und Kristallitanzahl) sowie einige Hartmetalleigenschaften der erfindungsgemäßen Wolframcarbidpulver sind mit denen des Stands der Technik, z.B. WC DS 50 (über Reaktionsweg WMP+C) vergleichbar.

Das Hartmetall-Gefüge des erfindungsgemäßen Wolframcarbidpulvers ist jedoch deutlich homogener als Gefüge die mit den Produkten des Stands der Technik, z.B. WC DS 50 erzielt werden können. Dies ergibt sich aus den FESEM-Aufnahmen der Figur 4, bei der auf der linken Seite Aufnahmen von mit erfindungsgemäßem Pulver des Beispiel 1 hergestellten Hartmetallgefüge zu sehen sind und auf der rechten Seite Aufnahmen der mit WC DS 50-Pulver gemäß Stand der Technik hergestellten Metallgefüge. Es ist deutlich zu erkennen, dass die Hartmetallgefüge ausgehend von den erfindungsgemäßen Pulvern deutlich homogener sind, obwohl die Herstellung bis auf das eingesetzte Wolframcarbidpulver identisch war.

Es hat sich zudem gezeigt, dass die Pulver der vorliegenden Erfindung besser verarbeitbar waren als diejenigen des Standes der Technik.

**Patentansprüche**

1. Wolframcarbidpulver mit

 - einer spezifischen Oberfläche nach BET, bestimmt per ASTM D 3663, zwischen 1,8 und 2,0 m$^2$/g,

- einer Kristallitgröße c, in den einzelnen Wolframcarbidkörnern zwischen 75 und 100 nm, röntgenographisch mittels XRD/Röntgenbeugung, Single Line, Scherrer Methode und Fourier-Peak-Transformationsauswertung mit einem NIST-zertifizierten Kristallitgrößenmuster als Referenz bestimmt
- einer durchschnittlichen Korngröße d, berechnet mittels der Formel $d(nm)=0{,}38((m^2{*}nm)/g)/BET(m^2/g){*}1000$ aus der spezifischen Oberfläche nach BET zwischen 186 nm und 217 nm,
- einer durchschnittlichen maximalen Kristallitanzahl n pro Wolframcarbidkorn, berechnet gemäß n=d/c, von 1,8 bis 2,7.

2. Wolframcarbidpulver nach Anspruch 1, **dadurch gekennzeichnet, dass** die Kristallitgröße in den einzelnen Wolframcarbidkörnern zwischen 75 und 95 nm liegt.

3. Wolframcarbidpulver nach einem der Ansprüche 1 oder 2, **dadurch gekennzeichnet, dass** es nach einem Direktcarburierungsprozess hergestellt wird.

4. Wolframcarbidpulver nach Anspruch 3, **dadurch gekennzeichnet, dass** der Direktcarburierungsprozess die folgenden Schritte in der angegebenen Reihenfolge umfasst oder aus diesen besteht:

   a) Bereitstellen von Ammoniumparawolframat und Kalzinieren zu $WO_3$ mit anschließendem Deagglomerieren;
   b) Vermischen und Verkneten des in Schritt a) hergestellten $WO_3$ mit Ruß, Wasser und organischem Binder;
   c) Extrudieren des in Schritt b) hergestellten Produktes zu Stränglingen mit einer Länge von kleiner oder gleich 10 mm und anschließende Trocknung;
   d) thermische Umsetzung des $WO_3$/Ruß-Granulates in einem Reaktionsofen, bevorzugt Drehrohrofen oder Durchschubofen, bei 900 bei 1200°C in Gegenwart einer Minimalmenge Argon zu einem Wolframcarbid-Precursor,
   e) thermische Behandlung des Precursors in einem Schubofen bei Temperaturen von 1300 bis 2000°C unter Wasserstoffatmosphäre;
   f) Deagglomeration des Wolframcarbids und Homogenisierung.

5. Direktcarburierungsprozess zur Herstellung eines Wolframcarbidpulvers gemäß wenigstens einem der Ansprüche 1 bis 4, umfassend die folgenden Schritte oder bestehend aus diesen:

   a) Bereitstellen von Ammoniumparawolframat und Kalzinieren zu $WO_3$ mit anschließendem Deagglomerieren;
   b) Vermischen und Verkneten des in Schritt a) hergestellten $WO_3$ mit Ruß, Wasser und organischem Binder;
   c) Extrudieren des in Schritt b) hergestellten Produktes zu Stränglingen mit einer Länge von kleiner oder gleich 10 mm und anschließende Trocknung;
   d) thermische Umsetzung des $WO_3$/Ruß-Granulates in einem Reaktionsofen bei 900 bei 1200°C in Gegenwart einer Minimalmenge Argon zu einem Wolframcarbid-Precursor;
   e) thermische Behandlung des Precursors in einem Schubofen bei Temperaturen von 1300 bis 2000°C unter Wasserstoffatmosphäre;
   f) Deagglomeration des Wolframcarbids und Homogenisierung.

6. Verwendung des Wolframcarbidpulvers nach einem der Ansprüche 1 bis 4 oder eines Wolframcarbidpulvers hergestellt nach Anspruch 5 ausgewählt aus der Gruppe bestehend aus der Verwendung für

   - die Herstellung von Hartmetallen, gegebenenfalls in Kombination mit metallischen Bindern Fe, Co, Ni, bevorzugt

      a) WC/Co-basierte-Hartmetalle,
      b) WC/Co-basierten-Hartmetalle unter Verwendung von Kornwachstumshemmern (VC, $Cr_3C_2$, TaC, TiC),
      c) Cermets und P-Hartmetalle in Kombination mit anderen Carbiden der Elemente Ti, Ta, Zr, Hf, Mo, Nb, W, Cr, Fe,
      d) Hartmetalle auf Basis von Hartstoff-Nitriden,
      e) Feinstkornhartmetalle mit Härten nach Vickers HV30 = größer 1600,
      f) binderlose Hartmetalle (HM-Binderanteil: kleiner 2%)

   - Zerspanungswerkzeuge wie z.B. Bohrer, Fräser, Wendeschneidplatten oder Hobelmesser,
   - hochbelastete Bauteile wie für Bohrköpfe,
   - den Uhrenbau,

- Einsatz als Neutronenreflektor,
- panzerbrechende Geschosse,
- Kugelschreiberkugeln,
- Reifen- oder Schuh-Spikes,
- chirurgische Instrumente.

**Claims**

1. A tungsten carbide powder with

   - a BET specific surface area as determined according to ASTM D 3663 of from 1.8 to 2.0 $m^2/g$;
   - a crystallite size c in the individual tungsten carbide grains of from 75 to 100 nm, as determined by radiography using XRD/X-ray diffraction, single line, Scherrer method, and Fourier peak transformation evaluation with a NIST-certified crystallite size specimen as a reference;
   - an average grain size d, calculated by means of the formula d (nm) = 0.38 (($m^2$*nm)/g)/BET ($m^2/g$) x 1000 from the BET specific surface area, of from 186 nm to 217 nm;
   - an average maximum crystallite number, n, per tungsten carbide grain, calculated according to n = d/c, of from 1.8 to 2.7.

2. The tungsten carbide powder according to claim 1, **characterized in that** the crystallite size in the individual tungsten carbide grains is from 75 to 95 nm.

3. The tungsten carbide powder according to either of claims 1 or 2, **characterized by** having been prepared by a direct carburizing process.

4. The tungsten carbide powder according to claim 3, **characterized in that** said direct carburizing process comprises or consists of the following steps in the stated order:

   a) providing ammonium paratungstate and calcining to $WO_3$, followed by deagglomerating;
   b) mixing and kneading the $WO_3$ prepared in step a) with carbon black, water and organic binder;
   c) extruding the product prepared in step b) into extruded rods having a length of smaller than or equal to 10 mm, followed by drying;
   d) thermally reacting the $WO_3$/carbon black pellets in a reaction oven, preferably a rotary kiln or tunnel kiln, at 900 to 1200 °C in the presence of a minimum amount of argon to form a tungsten carbide precursor;
   e) thermally treating the precursor in a pusher furnace at temperatures of from 1300 to 2000 °C under a hydrogen atmosphere;
   f) deagglomerating the tungsten carbide, and homogenization.

5. A direct carburizing process for preparing a tungsten carbide powder according to at least one of claims 1 to 4, comprising or consisting of the following steps:

   a) providing ammonium paratungstate and calcining to $WO_3$, followed by deagglomerating;
   b) mixing and kneading the $WO_3$ prepared in step a) with carbon black, water and organic binder;
   c) extruding the product prepared in step b) into extruded rods having a length of smaller than or equal to 10 mm, followed by drying;
   d) thermally reacting the $WO_3$/carbon black pellets in a reaction oven at 900 to 1200 °C in the presence of a minimum amount of argon to form a tungsten carbide precursor;
   e) thermally treating the precursor in a pusher furnace at temperatures of from 1300 to 2000 °C under a hydrogen atmosphere;
   f) deagglomerating the tungsten carbide, and homogenization.

6. Use of the tungsten carbide powder according to any of claims 1 to 4 or of a tungsten carbide powder prepared according to claim 5, selected from the group consisting of the use for

   - the preparation of cemented carbides, optionally in combination with metallic binders Fe, Co, Ni, preferably:

     a) WC/Co-based cemented carbides,

b) WC/Co-based cemented carbides using grain growth inhibitors (VC, $Cr_3C_2$, TaC, TiC),
c) cermets and P-code cemented carbides in combination with other carbides of elements Ti, Ta, Zr, Hf, Mo, Nb, W, Cr, Fe,
d) cemented carbides on the basis of nitrides as hard materials,
e) submicron grain cemented carbides with a Vickers hardness HV30 of > 1600,
f) binder-less cemented carbides (CC binder content: less than 2%);

- machining tools, such as drills, cutters, indexable inserts, or planer knives;
- heavy duty components, such as drill heads;
- watchmaking;
- use as neutron deflector;
- armor-piercing projectiles;
- pen balls;
- tire or shoe spikes;
- surgical instruments.

**Revendications**

1. Poudre de carbure de tungstène avec

   - une surface spécifique BET, déterminée selon ASTM D 3663, de 1,8 à 2,0 $m^2$/g,
   - une taille de cristallite c dans les graines individuelles du carbure de tungstène de 75 à 100 nm, déterminée par radiographie en utilisant XRD/diffraction des rayons-X, ligne singulière, méthode de Scherrer, et évaluation par transformation de pic de Fourier avec un modèle des tailles de cristallite certifié par NIST comme référence,
   - une granulométrie moyenne d, calculée en utilisant la formule d (nm) = 0,38 (($m^2$*nm)/g)/BET ($m^2$/g) x 1000 à partir de la surface spécifique BET, de 186 nm à 217 nm,
   - un nombre maximal des cristallites moyen n par graine de carbure de tungstène, calculé selon n = d/c, de 1,8 à 2,7.

2. Poudre de carbure de tungstène selon la revendication 1, **caractérisée en ce que** la taille des cristallites dans les graines individuelles de carbure de tungstène est de 75 à 95 nm.

3. Poudre de carbure de tungstène selon l'une des revendications 1 ou 2, **caractérisée en ce qu'**elle a été préparée par un procédé de carburation direct.

4. Poudre de carbure de tungstène selon la revendication 3, **caractérisée en ce que** ledit procédé de carburation direct comprend ou consiste en les étapes suivantes dans l'ordre indiqué :

   a) procurer du paratungstate d'ammonium et calciner en $WO_3$, et ensuite désagglomérer,
   b) mélanger et malaxer le $WO_3$ préparé dans l'étape a) avec du noir de carbone, de l'eau et un liant organique,
   c) extruder le produit préparé dans l'étape b) en cordons avec une longueur inférieure ou égale à 10 mm, ensuite sécher,
   d) faire réagir thermiquement les pellets $WO_3$/noir de carbone dans un four de réaction, de préférence un four rotatif ou un four à poussoir, à 900 à 1200 °C en présence d'une quantité minimale d'argon pour former un précurseur de carbure de tungstène,
   e) traiter thermiquement le précurseur dans un four poussant à des températures de 1300 à 2000 °C sous une atmosphère d'hydrogène,
   f) désagglomérer le carbure de tungstène, et homogénéisation.

5. Procédé de carburation direct pour préparer une poudre de carbure de tungstène selon au moins une des revendications 1 à 4, comprenant ou consistant en les étapes suivantes :

   a) procurer du paratungstate d'ammonium et calciner en $WO_3$, et ensuite désagglomérer,
   b) mélanger et malaxer le $WO_3$ préparé dans l'étape a) avec du noir de carbone, de l'eau et un liant organique,
   c) extruder le produit préparé dans l'étape b) en cordons avec une longueur inférieure ou égale à 10 mm, ensuite sécher,
   d) faire réagir thermiquement les pellets $WO_3$/noir de carbone dans un four de réaction à 900 à 1200 °C en présence d'une quantité minimale d'argon pour former un précurseur de carbure de tungstène,
e) traiter thermiquement le précurseur dans un four poussant à des températures de 1300 à 2000 °C sous une atmosphère d'hydrogène,
f) désagglomérer le carbure de tungstène, et homogénéisation.

6. Utilisation de la poudre de carbure de tungstène selon l'une quelconque des revendications 1 à 4 ou de la poudre de carbure de tungstène préparée selon la revendication 5, choisie dans le groupe consistant en l'utilisation pour

- la préparation de carbures cémentés, éventuellement en combinaison avec des liants métalliques Fe, Co, Ni, de préférence :

a) carbures cémentés à base de WC/Co,
b) carbures cémentés à base de WC/Co utilisant des inhibiteurs de la croissance de graines (VC, $Cr_3C_2$, TaC, TiC),
c) cermets et carbures cémentés de code P en combinaison avec d'autres carbures des éléments Ti, Ta, Zr, Hf, Mo, Nb, W, Cr, Fe,
d) carbures cémentés à base de nitrures matériaux durs,
e) carbures cémentés à graines ultrafines ayant une dureté Vickers HV30 de > 1600,
f) carbures cémentés sans liants (teneur de liant dans les CC : moins de 2 %),

- outils de coupe, comme forets, fraises, plaquettes, ou couteaux à raboter,
- composants fortement sollicités, comme pour des têtes de forage,
- horlogerie,
- utilisation comme réflecteur de neutrons,
- projectiles perforateurs de blindage,
- billes pour stylo,
- clous de pneumatiques ou de chaussures,
- instruments chirurgicaux.

Figur 1

Figur 2

Figur 3

Figur 4

Wasser

organischer
Binder

Ruß

H₂

Minimalmenge Ar

Kalzination APW zu WO₃ ← APW

Deagglomeration und ggf. Klassierung WO₃

Vermischen & Verkneten von WO₃ mit Ruß und
Wasser mit organischem Binder

Extrusion Stränglinge
Länge ≤10mm

Trocknung → Wasser

1. Thermische Stufe
Umsetzung WO₃+C→WC (Precursor) → Temperatur 900-1200°C / Ar+CO+CO₂

2. Thermische Stufe
Einstellen der Sinterstabilität → Temperatur 1300-2000°C / H₂

Deagglomeration und ggf. Klassierung WC

Homogenisierung

WC DN 2.0
(Kristallitgröße 75-100nm bei BET= 1,7-2,3m²/g und maximaler Kristallitanzahl von n=2,7)

Figur 5

Figur 6

Figur 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5372797 A
- JP 2005335997 B
- US 5567662 A
- US 5166103 A
- US 4984573 A
- US 5071473 A
- JP H03208811 B